**Europäisches Patentamt**

**European Patent Office**

**Office européen des brevets**

(19)

(11) Veröffentlichungsnummer : **0 087 653**
**B1**

(12) **EUROPÄISCHE PATENTSCHRIFT**

(45) Veröffentlichungstag der Patentschrift :
**11.12.85**

(51) Int. Cl.⁴ : **F 16 L 27/00**

(21) Anmeldenummer : **83101349.5**

(22) Anmeldetag : **12.02.83**

(54) Vorrichtung zum Aufnehmen und Ausgleichen von Winkeländerungen in Rohrleitungen.

(30) Priorität : **25.02.82 CH 1165/82**

(43) Veröffentlichungstag der Anmeldung :
**07.09.83 Patentblatt 83/36**

(45) Bekanntmachung des Hinweises auf die Patenterteilung : **11.12.85 Patentblatt 85/50**

(84) Benannte Vertragsstaaten :
**AT BE CH DE FR GB IT LI LU NL SE**

(56) Entgegenhaltungen :
**DE-A- 2 848 561**
**GB-A-   816 157**
**US-A- 1 958 260**

(73) Patentinhaber : **BOA A.G. Luzern**
**Kellerstrasse 45**
**CH-6002 Luzern (CH)**

(72) Erfinder : **Marti, Wilhelm**
**Rosenfeldweg 12**
**CH-6048 Horw (CH)**
Erfinder : **Reichen, Fredy**
**Haselweg 6**
**CH-6005 Luzern (CH)**

(74) Vertreter : **Blum, Rudolf Emil Ernst et al**
**c/o E. Blum & Co Patentanwälte Vorderberg 11**
**CH-8044 Zürich (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Vorrichtung zum Aufnehmen und Ausgleichen von Winkeländerungen in Rohrleitungen, wobei jeweils zwei starre Rohrstücke vorhanden sind, die über einen gemeinsamen Federbalg miteinander verbunden sind.

Der Mediumdruck in Rohrleitungen erzeugt Reaktionskräfte, die bei Verbindungsstellen zwischen einzelnen starren Rohrleitungsabschnitten aufgenommen werden müssen.

In der GB-A- 816 157 ist eine Vorrichtung zum Aufnehmen und Ausgleichen von Winkeländerungen in Rohrleitungen beschrieben, die eine Schwenkeinrichtung mit zwei zur Verbindung mit dem einen bzw. dem anderen starren Rohrstück bestimmte Schwenkteil aufweist, die wälzwippenförmig in Linienberührung aufeinander abgestützt sind, wobei die zwei Gelenkteile gegeneinander gerichtete Schwenklaschen aufweisen. Diese Vorrichtung ist innerhalb der Rohrstücke angeordnet und erzeugt somit einen Strömungswiderstand und ist der Errosion und gegebenenfalls Korrosion des strömenden Mediums ausgesetzt. Die sich in Linienberührung gegenseitig abstützenden Teile der Vorrichtung sind langgestreckte Leisten aus einem vorzugsweise harten Stoff, wobei die eine Leiste eingebaucht ist und damit eine in Längsrichtung derselben verlaufende Hohlkehle aufweist, die eine Pfanne bildet und die andere Leiste ausgebaucht ist und damit im Querschnitt kugelabschnittförmig gewölbt ist. Diese Leisten und die Schwenkteile weisen insgesamt keine gegenseitige Führung quer zur Rohrleitungslängsachse auf. Damit erfolgt bei einer Winkeländerung der jeweiligen Rohrleitung nur ausnahmsweise ein gegenseitiges Abrollen der Leisten und in der Regel eine gegenseitige Gleitbewegung, so dass nach einigen Winkeländerungen eine Kaltverschweissung und folglich ein unverhältnismässig hohes Ansteigen der Verstellkräfte auftritt.

Hier will die Erfindung Abhilfe schaffen. Die Erfindung, wie sie in den Ansprüchen gekennzeichnet ist, löst die Aufgabe, eine Vorrichtung zum Aufnehmen und Ausgleichen von Winkeländerungen in Rohrleitungen zu schaffen, bei der sich in Linienberührung wälzwippenförmig aufeinander abstützenden Teile einen Wälzkeil und ein Wälzprisma aufweisen, welches letztere eine V-förmige Nut zur Aufnahme des Wälzkeiles aufweist, wobei das Wälzprisma aus einem nachgiebigeren Stoff als der Wälzkeil hergestellt ist. Die durch die Vorrichtung erreichbaren Vorteile sind darin zu sehen, dass eine reibungsfreie Lagerung gebildet ist und keine Kaltverschweissung auftreten kann.

Die Wälzwippe kann mit einem Schneiden-Drehgelenk verglichen werden, das grundsätzlich eine in einer Pfanne abgestützte Schneide enthält, jedoch sind die Gelenkteile von Schneiden-Drehgelenken aus sehr harten Werkstoffen gefertigt.

Dadurch, dass die zwei Schwenkteile wälzwippenförmig aufeinander abgestützt sind, tritt nun keine Flächenpressung, sondern eine Hertzsche Pressung auf. Durch die geometrische Form der Wälzwippe ist eine Kaltverschweissung unmöglich. Damit können für die gesamte Lebensdauer eines Rohrleitungskompensators die Verstellkräfte konstant bleiben und im Vergleich mit einem Gleitlager um das 2- bis 3-fache kleiner bleiben. Auch kann der Verschleiss in der Wälzwippe vernachlässigbar sein, da an den Berührungsstellen zwischen Wälzkeil und Wälzprisma das von der Hertzschen Pressung her bekannte « Schälen » der Wälzprismaoberfläche auftreten kann. Dieses beeinträchtigt bekanntlich jedoch weder Funktionsfähigkeit noch Verstellkraft, da einfach die darunterliegende Oberflächenschicht zur neuen Berührungsstelle für das Wälzprisma werden kann.

Die Schwenkteile weisen vorteilhaft Gelenklaschen auf, welche an Flanschabschnitten befestigt sein können, die ihrerseits auf Druckschultern an Rohrstutzen abgestützt sein können. Damit kann eine optimale Krafteinleitung in die Rohrleitung gewährleistet sein. Bei den heute vielfach üblichen Gelenkkonstruktionen ist eine Befestigung der Gelenklaschen durch Verschweissung mit dem Stutzen vorgesehen. Die Krafteinleitung in die Rohrleitung ist dadurch punktuell, was zu Stutzendeformationen und letztlich Funktionsbeeinträchtigung führen kann.

Die Flanschabschnitte jedes Schwenkteiles beschreiben vorteilhaft einen Bogenabschnitt von weniger als 180°, wobei diese Flanschabschnitte über die in den jeweiligen Lücken eingesetzten Gelenklaschen miteinander verbunden sein können, derart, dass die Gelenklaschen gleichzeitig als Verbindungsglieder zwischen den Flanschabschnitten dienen können. Dieses kann gegenüber den bekannten vollen, ringsum verlaufenden Flanschabschnitten eine weitere wesentliche Materialeinsparung ergeben.

Ausführungen eines gemäss der Erfindung ausgebildeten Gelenkkompensatores können kleinere Abmessungen als vergleichbare bekannte Gelenkkompensatoren mit direkt an Rohrstutzen angeschweissten Laschen aufweisen. Dieses kann eine Verringerung des notwendigen Einbauraumes und damit der beim Kunden anfallenden Kosten für Raumbedarf, Schächte und Erdaushub mit sich bringen.

Eine Ausführung der erfindungsgemässen Vorrichtung ist derart, dass sie als Gelenkkompensator beispielsweise auch im Vakuumbereich oder bei Druckabfall im Betriebszustand, wo die Reaktionskräfte ihre Richtung ändern können, ihre Funktionsfähigkeit beibehalten. Gemäss dieser vorteilhaften Ausführung weist die jeweils mittlere Lasche stirnseitig eine gerundete Endpartie auf, wobei die Rundung kreisbogenförmig verläuft, wobei der Mittelpunkt dieses Kreisbogens mit dem jeweiligen Wälzpunkt zwischen Wälzkeil und Wälzprisma zusammenfällt. In den beiden äusseren Laschen dieser Ausführung ist eine Durchbohrung angebracht, in welcher ein Zapfen eingesetzt ist. Bei Umkehr der Reaktionskräfte kann sich somit der mittlere Laschen bei seiner Stirnpartie auf dem Zapfen abstützen, so dass ein Zusammenfahren des Kompensators verhindert wird.

Im folgenden wird die Erfindung anhand von lediglich einen Ausführungsweg darstellenden Zeichnungen näher erläutert. Es zeigt :

Figur 1 einen Gelenkkompensator in Seitenansicht, wobei Teile im Schnitt dargestellt sind,

Figur 2 eine Ansicht auf den Gelenkkompensator nach Fig. 1 in Richtung des Pfeiles A, und

Figur 3 eine Wälzwippe mit Wälzprisma und Wälzkeil, die in den jeweiligen Aussparungen in den Gelenklaschen angeordnet sind.

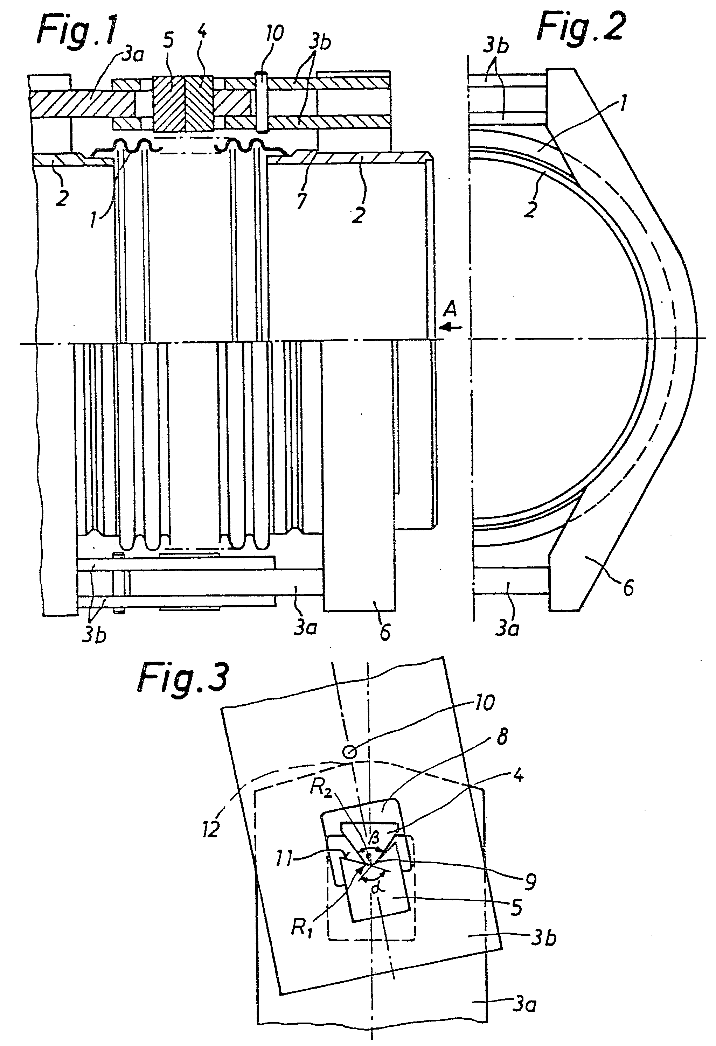

In der Fig. 1 ist ein als Metallbalg 1 ausgebildeter Federbalg dargestellt, der beiderends mit je einem Rohrstutzen 2 verschweisst ist. Diese Rohrstutzen 2 sind dazu bestimmt, an jeweils einem Rohrleitungsabschnitt angeschweisst zu werden. Auf jedem Rohrstutzen 2 ist eine mindestens teilweise umlaufende Druckschulter 7 angeordnet. An jeder Druckschulter 7 ist ein Flanschabschnitt 6 abgestützt. Aus der Fig. 2 geht hervor, dass bei jedem Stutzen 2 zwei Flanschabschnitte 6 vorhanden sind, die einander diametral gegenüberliegen und einen Kreisbogenabschnitt beschreiben, der kleiner als 180° ist. Diese zwei Flanschabschnitte 6 sind durch in der jeweiligen Lücke eingesetzte Gelenklaschen 3a, 3b miteinander starr verbunden. Die Gelenklaschen 3a, 3b verlaufen in Längsachsrichtung der Rohrstutzen 2. Aus der Fig. 1 ist ersichtlich, dass die in dieser Figur oben gelegene Gelenklasche 3b gabelförmig ausgebildet ist und die untere Gelenklasche 3a ein einfacher Metallstab ist. Jede Gelenklasche 3a ist scharnierförmig in die gegabelten Gelenklaschen 3b eingesetzt.

In den Figuren ist eine Ausführung dargestellt; bei welcher ein jeweiliger Stutzen 2 oben die gabelförmige Gelenklasche 3b und unten, also diametral gegenüberliegend die als einfacher Metallstab ausgebildete Gelenklasche 3a aufweist. Offensichtlich kommt auch eine symmetrische Ausbildung zur Ausführung, bei der z. B. der in Fig. 1 links gelegene Stutzen 2 ausschliesslich gabelförmige Gelenklaschen 3b und der rechts gelegene Stutzen 2 ausschliesslich die als einfacher Metallstab ausgebildeten Gelenklaschen 3a trägt.

In den Gelenklaschen 3a, 3b ist jeweils eine Aussparung 8 (siehe Fig. 3) ausgebildet. Dabei ist in der Ausparung 8 der gabelförmigen Lasche 3 b ein Wälzprisma 5 eingesetzt und in der Aussparung 8 der dazwischen verlaufenden, mittleren Lasche 3a ist ein Wälzkeil 4 eingelegt. Wälzkeil 4 und Wälzprisma 5 sind dabei seitlich unverschiebbar angeordnet.

Das Wälzprisma 5 weist eine V-förmige Nut mit einem Oeffnungswinkel $\alpha$ auf. Der Keilwinkel $\beta$ des Wälzkeiles 4 ist kleiner als der Nutenwinkel $\alpha$, derart, dass eine Schwenkbewegung zwischen Wälzkeil 4 und Wälzprisma 5 erfolgen kann. Die Nutensohle der Nute 11 des Wälzprismas 5 ist gerundet, wobei die Rundung einen Radius $R_1$ aufweist. Die Scheitelpartie des Wälzkeiles 4 ist ebenfalls gerundet und weist hier einen Radius von $R_2$ auf. Dabei ist der Radius $R_1$ der Rundung der Nutensohle grösser als der Radius $R_2$ der Rundung der Scheitelpartie des Wälzkeiles. Zudem ist das Wälzprisma 5 aus einem weicheren Stoff als der Wälzkeil 4 gebildet, derart, dass das eingangs erwähnte, bekannte « Schälen » an der Wälzprismaoberfläche auftreten kann. Die in die gegabelten Gelenklaschen 3b hineinragende Gelenklasche 3a weist stirnseitig einen gerundeten, kreisbogenabschnittförmigen Scheitelabschnitt 12 auf. Der Kreismittelpunkt des damit beschriebenen Kreisbogenabschnittes fällt mit der Berührungslinie 9 zwischen dem Wälzprisma 5 und dem Wälzkeil 4 zusammen. In den zwei äusseren Laschen ist ein Zapfen 10 (siehe auch Fig. 1) eingesetzt, der vom Scheitelabschnitt 12 im kleinen Abstand gelegen ist. Dieser Abstand beträgt bei einer vorteilhaften Ausführungsform 2 mm. Tritt nun in der Rohrleitung ein Unterdruck auf, bewegt sich der Scheitelabschnitt 12 zur Auflage auf den Zapfen 10. Dieses begrenzt die Relativbewegung der Gelenklaschen 3a, 3b zueinander derart, dass ein Zusammenfahren des Kompensators verhindert ist. Dadurch, dass der Scheitelabschnitt 12 derart kreisbogenabschnittförmig ausgebildet ist, dass der dazugehörige Mittelpunkt mit der Berührungslinie 9 zwischen Wälzkeil 4 und Wälzprisma 5 zusammenfällt, kommt der Scheitelabschnitt 12 in jeder relativen Winkelstellung der zwei Rohrstutzen 2 sicher zur Auflage auf den Zapfen 10. Somit ist dieser Rohrleitungskompensator in jeder Winkelstellung gegen ein Zusammenfahren gesichert.

**Patentansprüche**

1. Vorrichtung zum Aufnehmen und Ausgleichen von Winkeländerungen in Rohrleitungen, wobei zwei starre Rohrstutzen (2) zur jeweiligen Verbindung mit einem starren Rohrleitungsstück vorhanden sind, welche Rohrstutzen (2) über einen mit diesen beiderends fest verbundenen Federbalg (1) aus Metall, Gummi oder Kunststoff miteinander verbunden sind, welche Vorrichtung eine Schwenkeinrichtung (3a, 3b, 4, 5, 6) mit einem ersten, zur Verbindung mit dem einen und einen zweiten, zur Verbindung mit dem anderen Rohrstutzen (2) bestimmten Schwenkteil (3a, 3b, 6) enthält, welche zwei Schwenkteile (3a, 3b, 6) gegeneinander gerichtete, scharnierförmig ineinandergreifende Gelenklaschen (3a, 3b) aufweisen, über welche Gelenklaschen (3a, 3b) die zwei Schwenkteile (3a, 3b, 6) in einer Linienberührung wälzwippenförmig aufeinander abgestützt sind, dadurch gekennzeichnet, dass die einen Gelenklaschen einen Wälzkeil (4) und die anderen Gelenklaschen ein Wälzprisma (5) aufweisen, dass das Wälzprisma (5) eine V-förmige Nut (11) aufweist, deren Oeffnungswinkel $\alpha$ grösser als der Keilwinkel $\beta$ des Wälzkeiles (4) ist, dass die Nutensohle des Wälzprismas (5) und die Scheitelpartie des Wälzkeiles (4) gerundet sind, wobei der Radius (R₁) der Rundung der Nutensohle grösser als der Radius (R₂) der Rundung der Scheitelpartie des Wälzkeiles (4) ist, und dass das Wälzprisma (5) aus einem nachgiebigeren Stoff als der Wälzkeil (4) hergestellt ist, derart, dass die von den starren Rohrstücken (2) stammenden Reaktionskräfte an der Berührungsstelle (9) zwischen Wälzprisma (5) und Wälzkeil (4) eine Hertzsche Pressung erzeugen, womit eine reibungsfreie Winkelbewegung des Wälzkeils (4) zum Wälzprisma (5) gewährleistet ist.

2. Vorrichtung nach Anspruch 1, dadurch gekennzeichnet, dass jeder Schwenkteil zwei zur Verbindung mit dem starren Rohrstück (2) dienende, einander diametral gegenüberliegende Flanschabschnitte (6) aufweist, dass die Gelenklaschen (3a, 3b) jedes Schwenkteils einander diametral gegenüberliegen und von jeweils dem dazugeordneten Flanschabschnitt (6) in dessen Längsachsrichtung abstehen, dass die Gelenklasche (3b) des einen Flanschabschnittes gabelförmig sind und die Gelenklasche (3a) des anderen Flanschabschnittes in die Gabelung hineinragt, und dass jede Gelenklasche (3a, 3b) eine Aussparung (8) aufweist, in welche ein Wälzkeil (4) bzw. ein Wälzprisma (5) eingesetzt ist.

3. Vorrichtung nach Anspruch 2, dadurch gekennzeichnet, dass jeder Rohrstutzen eine Druckschulter (7) aufweist, auf welcher jeweils ein Flanschabschnitt (6) aufliegt.

4. Vorrichtung nach Anspruch 2, dadurch gekennzeichnet, dass der Wälzkeil (4) und das Wälzprisma (5) in der jeweiligen Aussparung (8) seitlich unverschiebbar eingesetzt sind.

5. Vorrichtung nach Anspruch 2, dadurch gekennzeichnet, dass Flanschabschnitte (6) jedes Schwenkteiles einen Bogenabschnitt von weniger als 180° beschreiben und über die in den jeweiligen Lücken eingesetzten Gelenklaschen (3a, 3b) miteinander verbunden sind.

6. Vorrichtung nach Anspruch 2, dadurch gekennzeichnet, dass die jeweils in die Gabelung hineinragende Gelenklasche (3a) stirnseitig einen gerundeten, kreisbogenabschnittförmigen Scheitelabschnitt (12) aufweist, wobei der Kreismittelpunkt des Kreisbogenabschnittes mit der Berührungslinie (9) zwischen Wälzprisma (5) und Wälzkeil (4) zusammenfällt.

7. Vorrichtung nach Anspruch 3, dadurch gekennzeichnet, dass die gegabelten Gelenklaschen (3b) von jeweils einem Zapfen (10) durchsetzt sind, welcher dem kreisbogenförmigen Scheitelabschnitt (12) im Abstand gegenüberliegt, derart, dass sich bei einer Umkehr der Reaktionskräfte unabhängig von der jeweiligen relativen Winkelstellung der starren Rührstücke der Scheitelabschnitt (12) auf dem Zapfen (10) abstützt, womit ein Zusammenfahren der aus Wälzkeil (4) und Wälzprisma (5) gebildeten Wälzwippe verhindert ist.

**Claims**

1. Apparatus for accommodating and compensating angular deflections in pipe conduits in which two rigid pipe stubs (2) are provided for a joining to a respective rigid pipe section, which pipe stubs (2) are interconnected by a spring bellows (1) of metal, rubber or plastic, which apparatus comprises a pivot means (3a, 3b, 4, 5, 6) including a first, intended to be mounted to the one, and a second pivot section (3a, 3b, 6) intended to be mounted to the other pipe stub (2), which two pivot sections (3a, 3b, 6) comprise joint plates (3a, 3b) projecting against each other and engaging into each other in a hinge-like fashion, the two pivot means (3a, 3b, 6) resting on each other via the joint plates (3a, 3b) in a rolling contact rocker fashion, characterized in that some of the joint plates comprise a rolling contact wedge (4) and the other of the joint plates a rolling contact prism (5), that the rolling contact prism (5) comprises a V-shaped groove (11) having an opening angle α which is larger than the wedge angle β of the rolling contact wedge (4), that the bottom of the groove of the rolling contact prism (5) and the apex section of the rolling contact wedge (4) are rounded, whereby the radius (R₁) of the curvature of the bottom of the groove is larger than the radius (R₂) of curvature of the apex section of the rolling contact wedge (4), and in that the rolling contact prism (5) is made of a material which is softer than such of the rolling contact wedge (4), such that the reactive forces stemming from the rigid pipe stubs (2) generate at the area of contact (9) between the rolling contact prism (5) and the rolling contact wedge (4) a hertz-like pressure, whereby a frictionless angular movement of the rolling contact wedge (4) relative to the rolling contact wedge (4) is secured.

2. Apparatus of claim 1, characterized in that each pivot section comprises two flange sections (6) intended for mounting the rigid pipe stub (2) and located diametrically opposite to each other, that the joint plates (3b) of one of the flange sections have a forklike shape and the joint plate (3a) of the other flange section projects into the fork, and that each joint plate (3a, 3b) comprises a cutout (8), within which a rolling contact wedge (4) or rolling contact prism (5), respectively, is located.

3. Apparatus of claim 2, characterized in that each pipe stub (2) comprises a pressure shoulder (7) abutted by a respective flange section (6).

4. Apparatus of claim 2, characterized in that the rolling contact wedge (4) and rolling contact prism (5) are located fixed against a lateral movement in the respective cutout (8).

5. Appparatus of claim 2, characterized in that the flange sections (6) of each pivot section define a section of a circle less than 180° and are interconnected by the respective joint plates (3a, 3b) located in the cutouts.

6. Apparatus of claim 2, characterized in that such joint plate (3a) which projects into the fork comprises at its face a rounded apex section (12) having the shape of a section of a circle, whereby the center of circle of the section of a circle coincides with the line of contact (9) between rolling contact prism (5) and rolling contact wedge (4).

7. Apparatus of claim 3, characterized in that the forked joint plates (3b) are penetrated by a respective pin (10) located oppositely of at a distance from the circular apex section (12) such that upon a reversal of the reactive forces the apex section (12) will contact the pin (10) irrespective of a respective angular relative position of the rigid pipe stubs such that a collapsing of the rolling contact rocker means defined by the rolling contact wedge (4) and rolling contact prism (5) is prevented.

### Revendications

1. Dispositif servant à l'absorption et à la compensation de variations angulaires dans des tuyauteries ou des canalisations, deux raccords de conduits rigides (2) étant prévus pour être reliés chacun à un tronçon de tuyauterie ou de canalisations rigides, raccords de conduits (2) qui sont reliés l'un à l'autre par un soufflet faisant ressort (1), en métal, en caoutchouc ou en matière synthétique, y fixé aux deux extrémités le dispositif comportant un dispositif à pivotement (3a, 3b, 4, 5, 6), avec une première partie pivotante (3a, 3b, 6) destiné à être reliée à l'un des raccords de conduits (2) et une seconde partie pivotante (3a, 3b, 6) destinée à être reliées à .l'autre raccord de conduit (2), les deux parties pivotantes (3a, 3b, 6) comportant des pattes d'articulation (3a, 3b) dirigées l'une vers l'autre et s'engageant l'une dans l'autre de façon à former charnière, pattes d'articulation (3a, 3b) par lesquelles les deux parties pivotantes (3a, 3b, 6) prennent appui l'une sur l'autre par contact linéaire en berceau de roulement, caractérisé en ce que les unes des pattes d'articulation portent un coin à roulement (4) et les autres des pattes d'articulation, un prisme à roulement (5), en ce que le prisme à roulement (5) présente une rainure en forme de V (11) dont l'angle d'ouverture $\alpha$ est supérieur à l'angle de coin $\beta$ du coin à roulement (4), en ce que le fond de la rainure du prisme à roulement (5) et la partie de sommet du coin à roulement (4) sont arrondis, le rayon ($R_1$) de l'arrondi du fond de la rainure étant supérieur au rayon ($R_2$) de l'arrondi de la partie de sommet du coin à roulement (4), et en ce que le prisme à roulement (5) est fait en une matière pouvant se donner davantage que celle du coin à roulement (4) de telle sorte que les efforts de réactions ayant leur origine dans les pièces tubulaires rigides (2) produisent une pression hertzienne à l'endroit de contact (9) entre le prisme à roulement (5) et le coin à roulement (4), ceci assurant un mouvement angulaire exempt de frottement du coin à roulement (4) par rapport au prisme à roulement (5).

2. Dispositif suivant la revendication 1, caractérisé en ce que chaque partie pivotante comporte deux parties de bride (6), diamétralement opposées l'une à l'autre qui servent à la liaison avec la pièce tubulaire rigide (2), en ce que les pattes d'articulation (3a, 3b) de chaque partie pivotante sont diamétralement opposées l'une à l'autre et dépassent chacune la partie de bride correspondante (6) dans le sens de l'axe longitudinal de celle-ci, en ce que la patte d'articulation (3b) de l'une des parties de bride est en forme de fourche et en ce que la patte d'articulation (3a) de l'autre partie de bride s'avance dans la fourche, et en ce que chaque patte d'articulation (3a, 3b) présente une ouverture (8) dans laquelle est placé un coin à roulement (4) ou un prisme à roulement (5).

3. Dispositif suivant la revendication 2, caractérisé en ce que chaque raccord de conduit présente un épaulement de pression (7) sur lequel prend appui une partie de bride (6).

4. Dispositif suivant la revendication 2, caractérisé en ce que le coin à roulement (4) et le prisme à roulement (5) sont placés dans l'ouverture correspondante (8) de façon à ne pas pouvoir se déplacer latéralement.

5. Dispositif suivant la revendication 2, caractérisé en ce que les parties de bride (6) de chaque partie pivotante décrivent un arc de cercle de moins de 180° et sont reliées l'une à l'autre par les pattes d'articulation (3a, 3b) qui sont placées dans les intervalles compris entre elles.

6. Dispositif suivant la revendication 2, caractérisé en ce que la patte d'articulation (3a) qui s'avance dans la fourche présente à l'extrémité une partie de sommet arrondie, en forme d'arc de cercle (12), le centre de la partie en arc de cercle coïncidant avec la ligne de contact (9) entre le prisme à roulement (5) et le coin à roulement (4).

7. Dispositif suivant la revendication 3, caractérisé en ce que les pattes d'articulation fourchues (3b) sont traversées par un axe (10) qui se trouve en présence et à distance de la partie de sommet en arc de cercle (12), de telle sorte qu'en cas d'inversion du sens des efforts de réaction, quelle que soit la position angulaire relative des pièces tubulaires rigides, la partie de sommet (12) prenne appui sur l'axe (10), ce qui empêche un coincement du berceau de roulement formé du coin à roulement (4) et du prisme à roulement (5).

0 087 653

Fig.1

Fig.2

Fig.3